# EUROPEAN PATENT SPECIFICATION

(11) **EP 2 136 688 B1**
(45) Date of publication and mention of the grant of the patent: **14.07.2010**
(21) Application number: 08735108.6
(22) Date of filing: 09.04.2008
(51) Int. Cl.: A47J 37/06, A47J 37/07

(54) **IMPROVED BARBECUE AND BARBECUE COMPONENTS**
VERBESSERTER GRILL UND GRILLKOMPONENTEN
BARBECUE AMÉLIORÉ ET COMPOSANTS DE BARBECUE ASSOCIÉS

(30) Priority: 16.04.2007 AU 2007902003 P
(43) Date of publication of application: 30.12.2009
(60) Divisional application: 10005497.2
(73) Proprietor: Aktiebolaget Electrolux, 105 45 Stockholm (SE)
(72) Inventor: ERIKSON, Lars, 182 63 Djursholm (SE); WILLIAMSON, Craig, New South Wales 2046 (AU); KING, Scott, New South Wales 2021 (AU); CRAIG, Lyndon, New South Wales 2010 (AU); WHITE, Greg, South Australia 5008 (AU); THOMPSON, Lyall, South Australia 5008 (AU); WILD, Greg, South Australia 5041 (AU); STEVENS, Craig, 5024 Fulham Gardens, SA (AU)
(74) Representative: Samzelius, Roger Mikael
(86) International application number: PCT/EP2008/002795
(87) International publication number: WO 2008/125258

(56) References cited:
- US-A- 1 504 102
- US-A- 3 369 481
- US-A- 4 574 770
- US-A- 4 608 917

## Description

### Field of the invention

The present invention relates to barbecues and in particular to flame viewing systems, grilles, lids, hotplates or griddles, and grease collector systems for such barbecues.

### Background of the invention

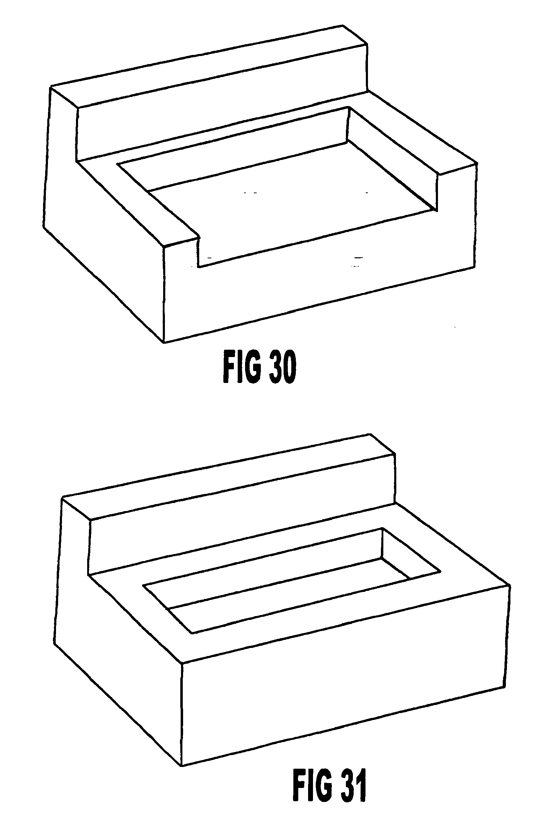

Outdoor gas barbecues are in the main arranged on trolleys. When installed in a bench such installation generally requires that the barbecue be installed in a U-shaped cut-out in a bench top, through the top and front of the bench (see figure 30 of the accompanying figures), so that the controls and grease tray, generally located underneath the combustion chamber of the barbecue, can be accessed from the lower front of the barbecue.

However, with increasing market acceptance of outside kitchen areas, prior art barbecues, such as those installed in benches as in figure 30 are inappropriate for use in a rectangular cut-out in a middle portion of the bench whereby the bench completely surrounds the barbecue, as in figure 31 of the accompanying drawings. Document US-4574770 discloses a barbecue.

### Summary of the invention

The present invention provides a barbecue having an outer cabinet which is adapted to fit into a bench top via hole in said bench, said cabinet having an upper periphery adapted to engage an upper surface of said bench, said barbecue including along at least a portion of one side a trough which extends downwardly from said upper periphery, said barbecue having a wall separating said trough from a combustion chamber wherein there is located at least one burner, whereby said wall includes a viewing panel so that an operator standing close to said one side can view flame on said burner through said trough and said panel.

The wall can include at least one viewing panel for each burner present in said barbecue.

The wall can be formed from an inner wall and an outer wall with an air gap between said inner and outer wall.

The viewing panel can be formed by at least one aperture through said wall.

The viewing panel can be covered by a grating. This grating can allow the manual ignition of burners.

The viewing panel can be covered by a heat proof see-through panel such as a mica panel or the like.

The trough can be adapted to receive a grease collector.

The grease collector can include an aperture through said viewing panel can be viewed.

The grease collector can have a rearward portion which sits below said viewing panel, whereby said grease collector does not obstruct a user's view of the viewing panel when assembled into said barbecue.

It is further disclosed a lid for a barbecue said lid including an upper surface adapted to overlie and be spaced from a cooking surface of said barbecue, said lid including sidewalls extending downwardly from said upper surface, said lid being adapted to be hingedly attached to a first side of said barbecue or a support thereof, said lid including on a second side opposite to said first side a handle which is recessed into an underside edge of said lid on said second side.

The handle can be formed by a downwardly extending wall being spaced apart from said edge of said second side.

The handle can extend substantially along the whole length of said second side.

The handle is preferably not visible from above said lid in plan view.

The lid can be hingedly attached to said first side of said barbecue or a support thereof, by means of a biased hinged to assist the user in opening and maintaining the lid in an open condition.

It is further disclosed a lid for a cooking appliance, wherein the lid is of a generally open box construction having a front side which lies at an undercut angle to the vertical. The lid can include a handle constructed from heat insulative or resistant material, with the handle being attached to the front side of the lid. Further the handle can have a block construction with a rear surface angled to the vertical to approximately the same magnitude as the front side is to the vertical so that a front face of the handle is approximately vertical, when the lid is horizontal.

It is further disclosed a hotplate or griddle for a barbecue having a generally planar cooking surface on an upper side and a combustion chamber surface underneath said plate including an upwardly extending wall along at least a portion of the periphery of said plate, said wall being, at least in part, of a thickness which is greater than the thickness of said hot plate measured from the planar cooking surface to said combustion chamber surface.

The wall can include a recess therein which extends for substantially the same length as the length of said wall.

The wall can have at least two vertical sides and an upper surface therebetween.

The upper surface of said wall can include a series of vents therethrough so that heat and or combustion products can pass through said vents.

There can be two walls, located along two opposite sides of said hotplate or griddle.

The hotplate or griddle can be generally rectangular or square.

It is further disclosed a grease collection system for a cooking appliance having a cabinet and front and rear edges, said cabinet adapted to hold at least one of a hotplate and or a grille, said cabinet including, at least along a portion of the length of said front edge, a removable grease collector which extends along at least a part of a forward edge of said hot plate or grille so as to receive grease or liquid or other substances therefrom.

The collector is removable from said cabinet whist said hot plate or grille remains in said appliance.

The collector can include one elongated side which is releasably securable to said cabinet.

The collector can be removable from said cabinet in a step wise motion.

The step wise motion can be comprised of first a vertical motion then horizontal motion then vertical motion.

The collector includes two spaced handle means to facilitate removal of said collector from said cabinet.

The handle means can be an aperture through a side wall of said collector.

The aperture can include a grommet or bead around its periphery.

The handle means can enable said collector to have its angular of orientation controlled as said collector is removed from said cabinet.

The cabinet can include a heat shield between the heat source for said appliance and said collector.

The hot plate or grille can extend over and past said heat shield to terminate above said collector.

The heat shield can include a double wall arrangement having an air gap between.

The heat shield can include at least said one viewing aperture to enable an operator to view through or past said collector and said apertures to determine if a heat source is activated.

The at least one aperture includes a mica viewing panel.

It is further disclosed a grille assembly comprising an upper and a lower grid, the lower grid including a spaced array of channels extending the length of the grille, said upper grid being comprised of bar members which extend the length of the grille which will sit over spaces between said channels of said lower grid, said bar members having their sides located over adjacent channels of said lower grid, said grille being characterised by including two side channel members which restrict the movement of said upper grid when mounted on said lower grid.

The bar members can be shaped so as to have a longitudinally extending apex and at least two generally vertical sides.

The bar members can be solid or prismatic in construction.

The bar members can be convex upwardly oriented channels.

The lower grid can include at rear portion thereof, partially through side walls of said channels, a series of cut-out to receive a first support member on which is mounted said bar members of said upper grid.

The series of cut-outs and said support member can interact to prevent said upper grid from moving in the direction of extension of said bar members and said channels.

The lower grid can include leg means to set the angle at which said channels will lie when mounted in a cooking appliance to use said grille assembly.

The upper grid can include a second support member, said first and second support members keeping said bar members spaced from each other and keepings said bar members generally parallel to each other.

The second support member permits the bar members to rest above said channels.

The first support member permits the bar members to lie in close proximity to said channels when assembled.

The grille assembly allows said upper grid to separate from said lower grid for cleaning purposes.

It is further disclosed a barbecue having a cabinet to support a hotplate and or grille above a combustion space which contains at least one burner therein, said barbecue including a waste liquid and solid collection means within said cabinet, said liquid and solid collection means being separated from said combustion space by a heat shield.

The waste liquid and solid collection means can be located in a trough in a forward space of said cabinet.

The waste liquid and solid collection means can include at least one removable container in said forward space of said cabinet.

The heat shield can include at least one viewing panel to allow the operator to view flame on respective ones of said burner.

The trough can include aperture means to allow air to circulate around said container.

The trough in said cabinet can allow viewing of said viewing panel from a forward end of said barbecue.

In the above paragraphs and in the following description and claims the word "HOTPLATE" refers to a structure having a cooking surface which is not vented and which is a predominantly closed, such as a griddle type structure having a flat or corrugated metal surface, which is heated from underneath for the purpose of cooking on the upper side thereof. This meaning is imported notwithstanding that in different jurisdictions the word HOTPLATE may have other meanings, some of which may be more limited, than used herein, or notwithstanding that other more apt words might be used as a substitute.

Similarly with respect to the word GRILLE, which refers to a vented cooking structure or surface, such as a gridiron type structure made up of bars, rods or channels through which heat can pass.

### Brief description of the drawings

An embodiment or embodiments of the present invention will now be described, by way of example only, with reference to the accompanying drawings, in which:

Figure 1 illustrates a perspective view of an assembled in-bench barbecue;

Figure 2 illustrates an exploded perspective view of the barbecue of figure 1;

Figure 3 illustrates a section view in direction of arrows III-III of figure 1;

Figure 3A illustrates a part sectional view with some components removed;

Figure 4 illustrates a section view in direction IV-IV of figure 1;

Figure 5 illustrates a part detail of the grease management system and viewing system;

Figure 6 is a perspective view of a grease collector used in figure 5;

Figure 7 is a rear view of the grease collector of figure 6;

Figure 8 is a side view of the grease collector of figure 6;

Figure 9 is a forward perspective view of an assembled grille;

Figure 10 is a rear view of the grille of figure 9;

Figure 11 is a front view of the grille of figure 9;

Figure 12 is a perspective view of the lower portion of the grille of figure 9;

Figure 13 is a perspective view of the upper portion of the grille of figure 9;

Figure 14 is a side view of the grille of figure 9;

Figure 15 is perspective view of a hotplate or griddle;

Figure 16 is an underneath view of the hotplate of figure 15;

Figure 17 is a front view of the hotplate of figure 15;

Figure 18 is a section view through in direction of arrows XVIII-XVIII of figure 15;

Figure 19 is a section view through in direction of arrows XIX-XIX of figure 15;

Figure 20 illustrates a perspective view of a barbecue lid;

Figure 21 illustrates an exploded perspective view of the lid of figure 20;

Figure 22 illustrates a plan view of the lid of figure 20;

Figure 23 illustrates a front view of the lid of figure 20;

Figure 24 illustrates a side view of the lid of figure 20;

Figure 25 illustrates a front corner detail of the lid of figure 20;

Figure 26 illustrates a perspective view of an alternate lid to that of figures 20 to 25;

Figure 27 illustrates an exploded perspective view of the lid of figure 26;

Figure 28 illustrates the shape of the single metal panel blank from which the lid component is made;

Figure 29 illustrates the blank of figure 29 with some of the sides folded;

Figure 30 illustrates a diagram of the U-shaped cut-out bench type;

Figure 31 illustrates a diagram of a bench with hole though which the drop-in barbecue described herein can be mounted;

Figure 32 illustrates a perspective cut away view of the left side of the barbecue with a grille assembly mounted therein to show how the grille assembly is supported by the heat shield and rear step;

Figure 33 illustrates a perspective cut away view of the left side of the barbecue with a hotplate mounted therein to show how the hotplate is supported by the heat shield and rear step;

Figure 34 illustrates a perspective view another lid for use with the barbecue of the present invention;

Figure 35 illustrates a part detail perspective of a cool handle of the lid of figure 34; and

Figure 36 illustrates a cross sectional detail of how the handle of figure 35 attaches to the lid of figure 34.

### Detailed description of the embodiment or embodiments

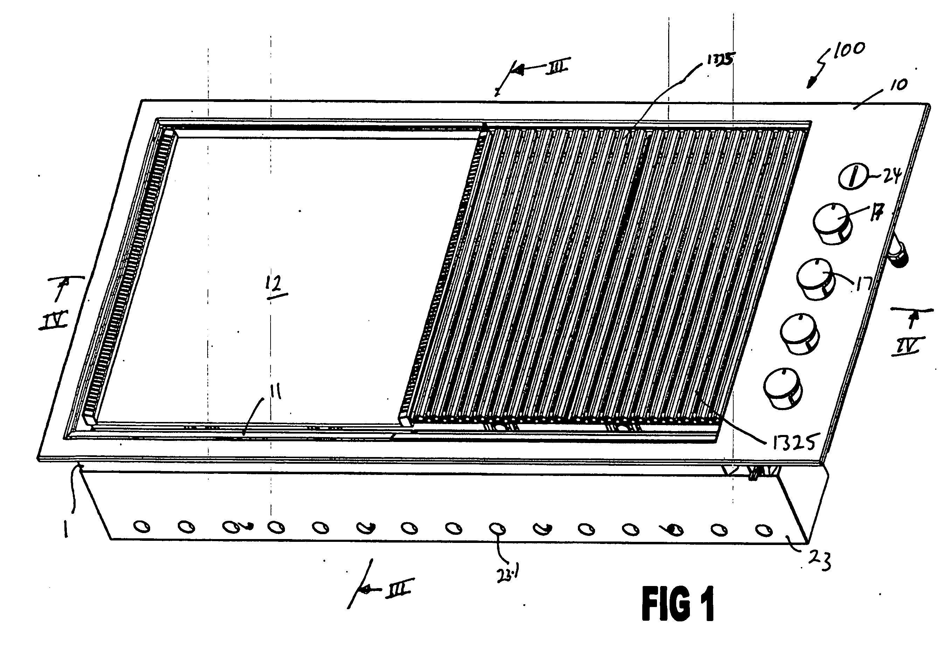

Illustrated in figure 1 is a perspective view of an in-bench barbecue 100 having a cabinet 1, a front cover plate 23 with holes 23.1 therein, a hot plate 12, grille assembly 1325, a frame surround 12 and control knobs 17. Each of these components and the construction of the barbecue 100 will be described in more detail below.

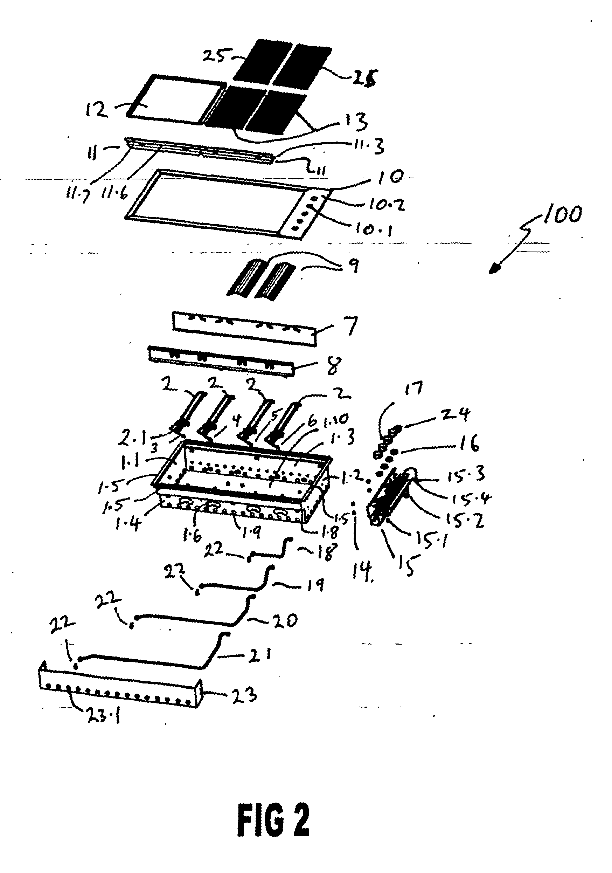

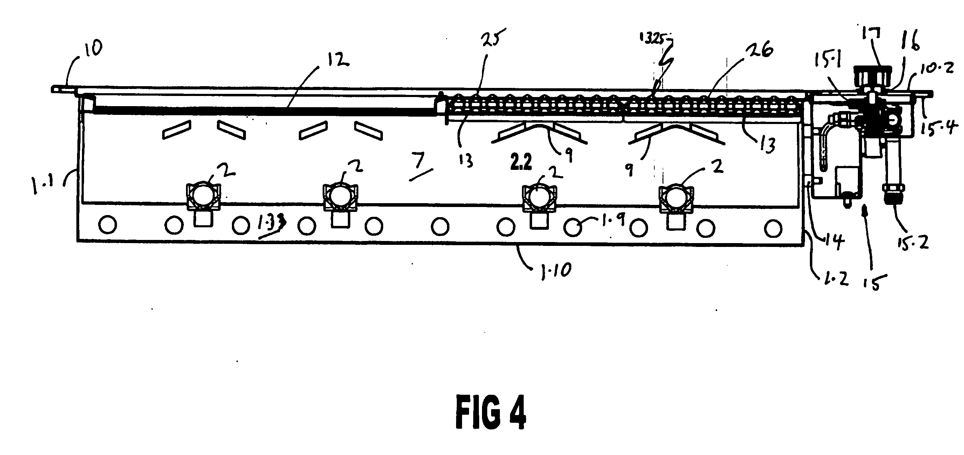

Illustrated in figures 2, 3, 3A and 4 is the barbecue 100 in an exploded perspective view, and two-cross sections respectively. The barbecue 100 comprises a generally rectangular cabinet 1 having a base 1.10 and a left side 1.1, a right side 1.2, a stepped rear side 1.3 having a step 1.31 and a stepped front side 1.4. At the upper peripheral edge of each of the sides is a flange 1.5 which will prevent the cabinet 1 from sinking into a hole or aperture through a bench top. The cabinet 1 can be secured into a bench top by screws passing through the sides 1.1 and 1.2 into the side edge of the aperture, through the bench top, or alternatively clamping or securing mechanisms as used for in-bench cooking hobs or sinks can be used.

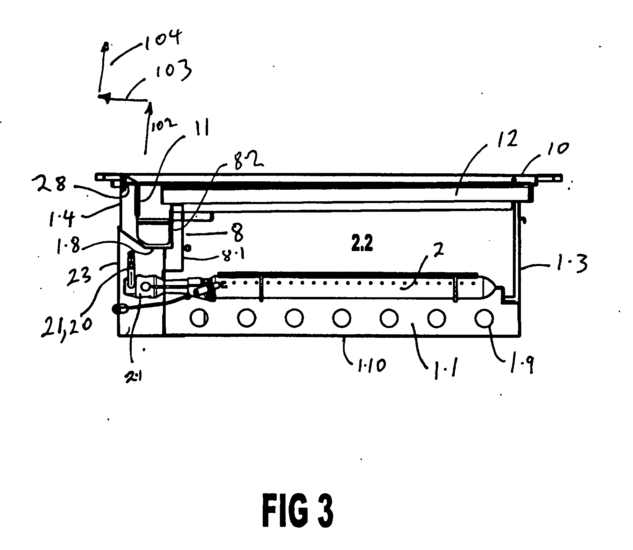

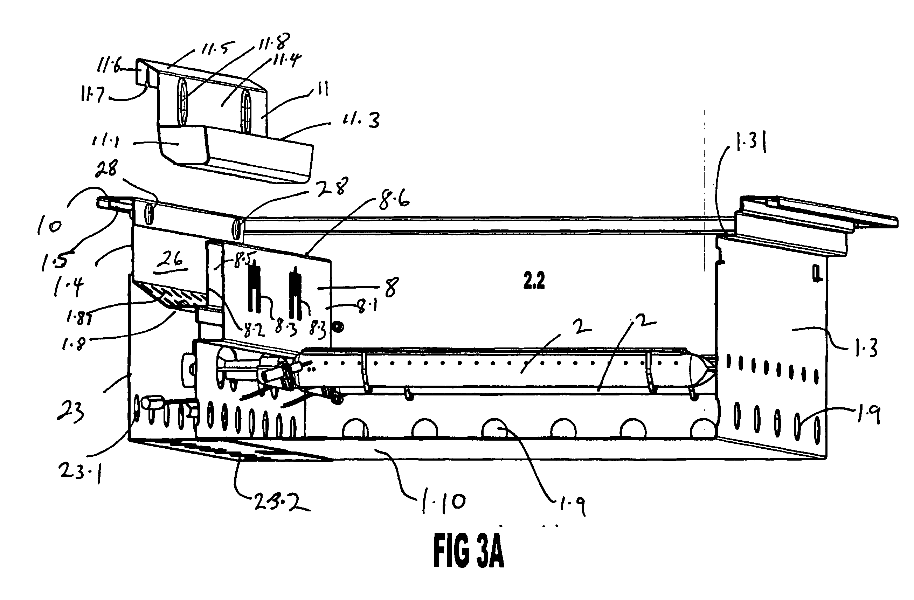

Through apertures 1.6 in the front side 1.4 can pass the injection nozzles 2.1 of the burners 2 as best seen in the cross section of figures 3 and 3A. The injection nozzles 2.1 receive the terminus of respective gas conduits 18, 19, 20 and 21 which can be secured to the cabinet 1 by means of spring clips 22, so that gas passing through the conduits 18, 19, 20, 21 can be injected via the nozzles 2.1 into the gas burners 2 for ignition during use.

The conduits 18, 19, 20, 21 are protected by a cover plate 23 which is attached to the cabinet 1 so as to sit below the step 1.8 in the front side wall 1.4. The right hand side of each of the conduits 18, 19, 20, 21 is connected to gas control rail 15 which has a series of gas control valves 15.1 located therein. The gas control rail 15 is attached to the side 1.2 by means of screws (not illustrated) and spacers 1.4 which help to keep the gas control rail 15 at a required temperature of operation when the burners 2 are functioning. The underside of the gas control rail 15 includes a male connector 15.2 for connection to standard gas fitting to supply gas under pressure to the barbecue 100. The gas control rail 15 also includes an outer edge 15.4 which will engage the right hand side rim of the aperture through the bench in which the barbecue 100 is located.

Also included in the gas control rail 15 is a battery storage 15.3 so as to supply electricity for the igniters when a gas control valve stem is pushed in a downward direction by an operator, via control knobs 17. Each burner 2 has associated with it a thermo couple and igniter 3, 4, 5 and 6 respectively. As the igniters obtain power from the batteries, the igniter continues to spark for as long as the operator is pushing down on the control knob 17 and for as long as there is charge stored in the batteries. Should the batteries require replacement a battery cover cap 24 is removed from the battery storage housing and the batteries replaced and the cover 24 replaced. It will be noted that the battery cover cap 24 is accessible from the top surface of the barbecue 100.

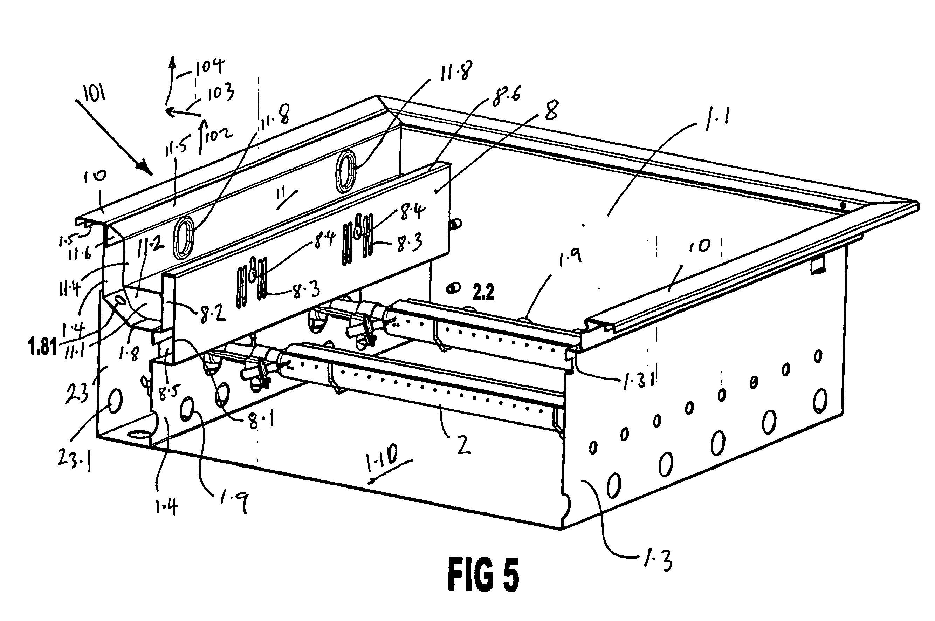

As illustrated in figure 3A and Figure 5 it can be seen that the step 1.8 in front wall 1.4 has a series of apertures 1.81 which underlie the grease collector 11, when the grease collector is assembled in the cabinet 1. The apertures 1.81 receive unheated air from apertures 23.1 and 23.2 in the cover plate 23, and allows this unheated air to pass around the grease collector 11, to thus keep the trough 26 and the grease collector 11 located therein, relatively cool, by comparison to the heat generated from the 2.2 chamber side of the heat shield 8.

A rear heat shield 7 is located inside the cabinet 1 adjacent the rear wall 1.3 which serves to mount heat distributors 9 located above the two burners 2 which are located below the grille assemblies 1325 when assembled. The heat distributors 9 (commonly called vaporisers) serve to distribute the heat more evenly and can thus help to stop flare ups by concentration of heat passing from the combustion chamber 2.2 through the grille assemblies 1325.

The rear heat shield 7 also serves to keep the outer wall 1.3 cool by absorbing radiant and convective heat from the burners and leaving an air gap to the external wall 1.3.

As illustrated in figures 2, 3 and 5 a forward heat shield 8 has a internal wall 8.1 and an external generally vertical wall 8.2 and an air gap 8.5 therebetween. The top edge 8.6 of the heat shield 8 provides a forward support to bear the load provided by the hot plate 12 and the grille assemblies 1325 (as seen in figure 3) which load is transmitted thereto by the forward ends of the hot plate 12 and grille assemblies 1325.

The box construction of the heat shield 8 ensures that the outer surface 8.2 is maintained at a reasonably cooled temperature by comparison to the inner surface 8.1. This helps to keep the trough 26, formed by the step 1.8 in the forward wall 1.4, relatively cool as this trough 26 will receive the grease collectors 11 when assembled, as will be described below.

The heat shield 8 includes a series of slots or apertures 8.3 through the rear wall 8.1 corresponding to the respective locations of the burners 2. Likewise there are a series of apertures 8.4 through the forward wall 8.2. The apertures 8.3 and 8.4 are in register together and the trough 26 formed by the step 1.8 and the trough shaped nature of the generally Z-shaped grease collectors 11, ensures that a person looking in the direction of arrow 101 in figure 5 (which is rearwardly and downwardly relative to the barbecue 100) will see through the trough 26 and the apertures 8.4 and 8.3, to view the respective burners 2 to determine whether or not a flame exists thereon. The apertures 8.4 and 8.3 provide a means to manually light or ignite them by means of a long match stick or a lighter having an elongated neck. This arrangement ensures that a means to view the gas burners 2 and to manually light or ignite them, is provided even though the barbecue 100 is placed inside a hole or aperture through a bench as in figure 31, which in turn means that the forward faces of the barbecue 100 are below and hidden by the bench top.

To complete the assembly of the cabinet 1 a frame surround 10, a portion of which is visible in figure 2, is secured to the flange 1.5 around the cabinet and the flange 15.4 on the gas control rail 15.

The frame surround 10 has five apertures 10.1 through the right hand panel 10.2 which overlays the gas control rail 15. Through the holes 10.1 the valve stems of the valves 15.1 protrude. The apertures 10.1 and the valve stems are sealed with respect to the top surface 10.2 by four grommets 16.

The fifth hole 10.1 in the plate 10.2 allows the battery cover cap 24 to pass through and seal against.

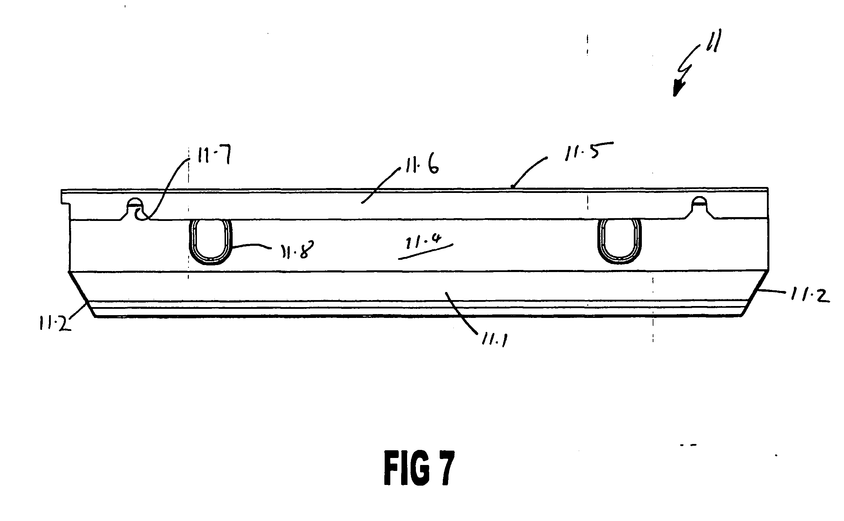

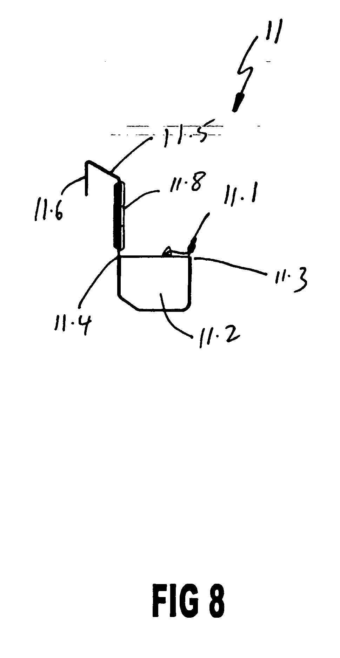

As is illustrated in figures 1, 2, 3, 3A, 5, 6, 7 and 8, the grease collectors 11 (of which only one is illustrated in figures 3A and 5) are of a generally Z-shape configuration with a lower trough 11.1 which has left and right sides 11.2 and a rear edge 11.3 which when assembled is positioned below the lower most edges of the apertures 8.3 and 8.4 in the heat shield 8. The forward wall 11.4 of the trough 11 is considerably higher than the rear edge 11.3 and terminates in a forwardly directed flange 11.5 which in its turn has extending therefrom a downwardly extending flange 11.6 which is best viewed in figure 8. It can be seen from figures 5 and 7 that the downwardly extending flange 11.6 has cut outs 11.7 which allow the grease collectors 11 to hang off screws or rivets 28 which are located in the upper region of the wall 1.4.

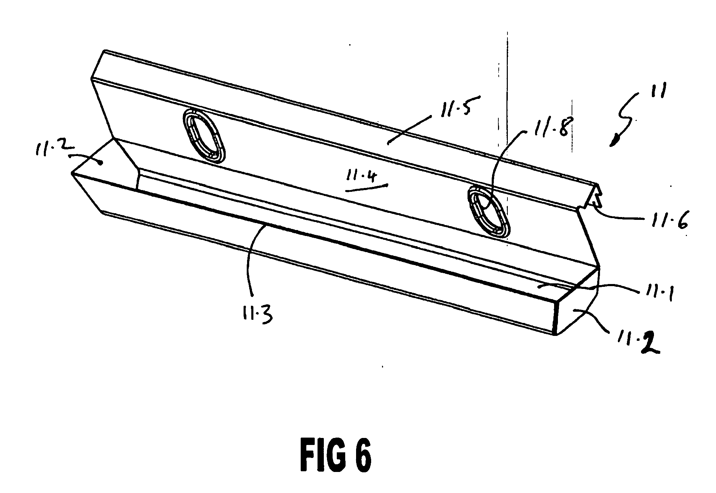

As can be seen from figures 6, 7 and 8 the forward wall 11.4 includes two apertures 11.8 therein. The edges of the apertures 11.8 are protected or covered by a rubber or silicone grommet. Alternatively, the edges of the apertures 1.8 can be beaded or otherwise rounded or blunted, so that users can position their fingers through the apertures 11.8 so as to lift the flange 11.6 off the screws or rivets 28. Providing two apertures 11.8 ensures that the operator can keep the grease collector 11 generally horizontal so as to ensure that any grease or liquid contained within the collector 11 will not spill on the way to disposal.

As can be seen from figures 3 and 5, the forward edges of the hot plate 12 and grille assemblies 1325 sit over the trough 11.1, and thus a direct or single vertical movement of the grease collectors 11 will not allow the grease collectors to be removed from the cabinet 1. Instead, what is required is movement first in the vertical direction of arrow 102 until the trough 11.1 is close to or engages the under surface of the hot plate 12 or grille assembly 1325, by which time cut-outs 11.7 have cleared screw or rivets 28. Then generally horizontal movement is required in the direction of arrow 103 which is towards the forward end of the barbecue 100 thus allowing the trough 11.1 to clear the underside lip of the hotplate 12 or grille assemblies 1325 until the forward wall 11.4 of the trough engages or is close to the upper forward wall of the side 1.4. At this point a final vertical movement in the direction of arrow 104 can be resumed to completely remove the grease collectors 11 from the cabinet 1, without removing the hotplate 12 or grille assemblies 1325.

The installation of the grease collectors 11 is the reversal of the arrows 104, 103, 102 with the rear flange 11.6 being hooked by means of the recesses 11.7 onto the screws or rivets 28.

The hotplate 12, which will be described in more detail below, is preferably located on the left hand side of the barbecue 100, away from the gas control rail 15. The grille assemblies 1325, each preferably constructed from an upper and lower piece, as will be described in more detail later, is preferably located on the side of the cabinet 1, nearest to the gas control rail 15. The arrangement ensures that combustion products produced in the combustion chamber 2.2, which can escape quicker through the grille assemblies 1325 than from under the hotplate 12, will have a lesser effect on the gas control rail, than if the opposite arrangement were utilised. Thus the grille assembly 1325 side of the cabinet 1 tends to be cooler than the hotplate 12 side and thus the grille assembly 1325 side is the better location for the control rail 15. This effect can also be achieved if one grille assembly 1325 is located on either side of a hotplate 12.

An advantage of the construction of the cabinet 1 of the barbecue 100 is that the barbecue 100 is able to be a drop in bench unit and installed through a hole in a bench rather than through a U-shape cut out as illustrated in figure 30, as has been the case in barbecues to date. This is further assisted by the improved viewing arrangement and grease collection system by being located at the forward end of the barbecue 100. This provides a trough through which the burners 2 can be visible via apertures 8.3 and 8.4 through the heat shield 8. Further as the grease management system is located at the forward end of the barbecue, access for cleaning and use is convenient while the provision of the heat shield 8 ensures that heat and flame will not ignite the contents thereof.

It will be seen from figures 1, 2, 3, 3A, 4 and 5 that near the lower edges of the sides 1.1, 1.2, 1.3, 1.4 of the cabinet are located a series of holes 1.9, just above the base 1.10. These holes 1.9 allow air for cooling and combustion to pass into the cabinet 1, from the under bench regions of the bench top, when the barbecue 100 is installed.

As the cabinet has a closed base 1.10 the space underneath the cabinet 1 when mounted in a bench, can be used for storage. If desired the plate 1.10 can have a spaced heat shield so that the under surface remains cool whilst the heat shield absorbs the heat generated from the radiant component of the flame present on the burners 2 during use.

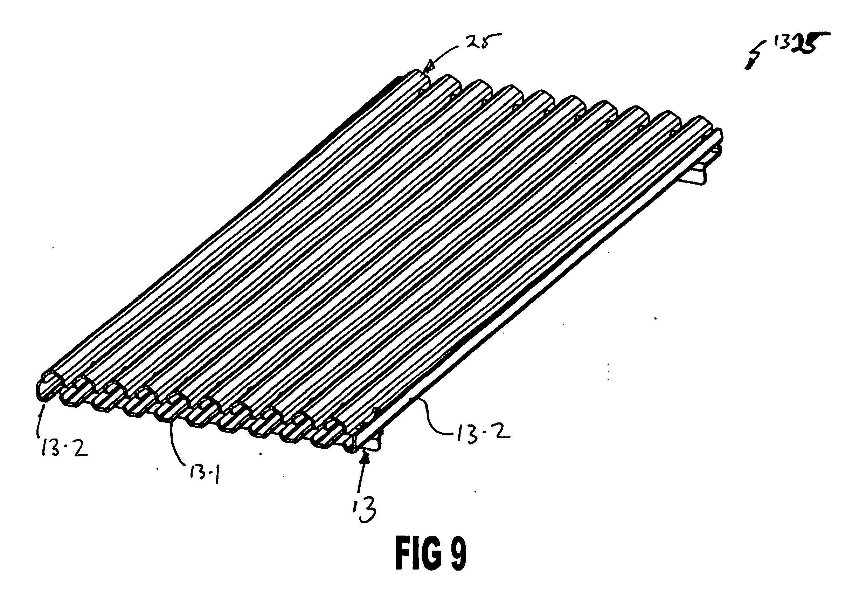

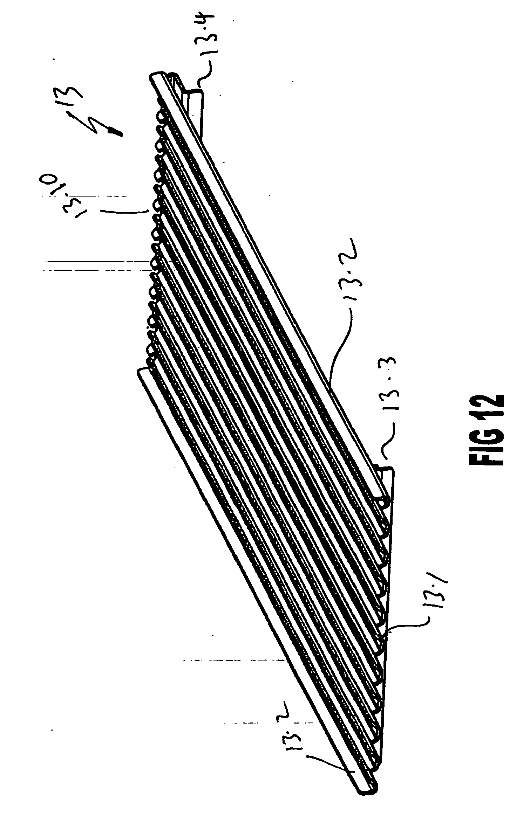

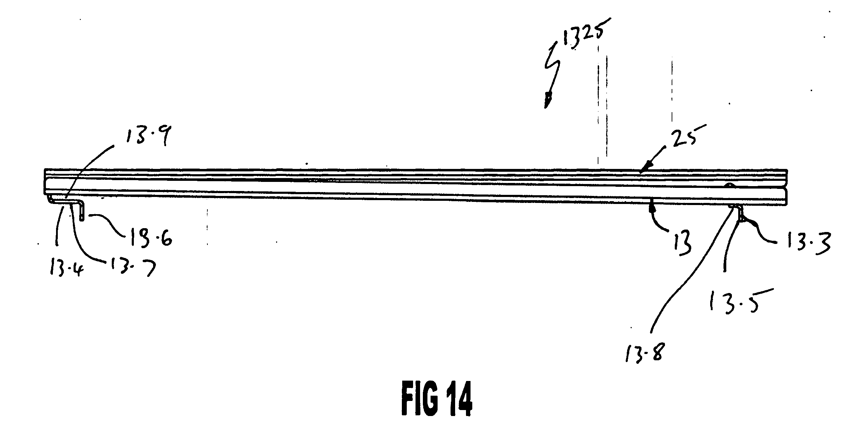

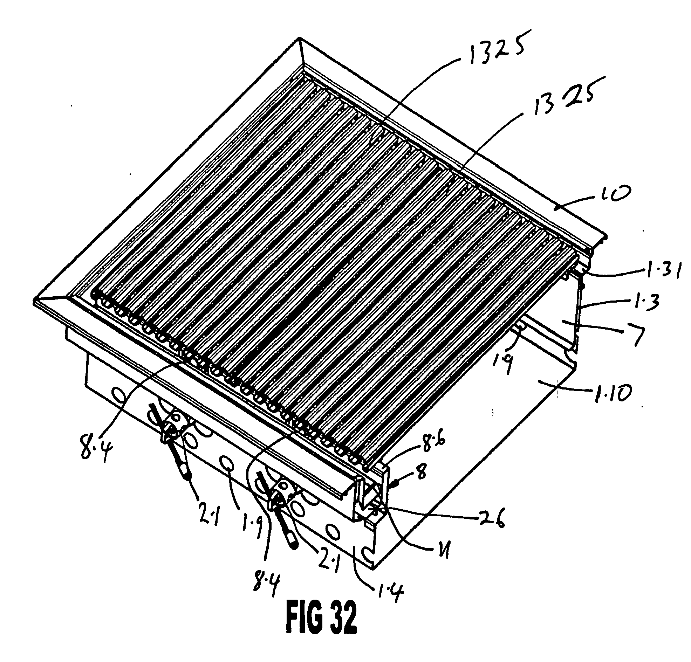

Illustrated in figures 9, 10, 11, 12, 13 and 14 are a grille assembly 1325, and the lower grid 13 and upper grid 25 thereof. From these figures it can be seen that the lower grid 13 has concave upwardly opening channel members 13.1, with half channel members 13.2 on the side peripheries of the lower grid 13. The channels 13.1 and 13.2 are held in generally parallel relationship to each other by laterally extending forward support 13.3 and laterally extending rearward support 13.4. The support 13.3 is generally L-shaped in cross section, while support 13.4 is generally Z-shaped in cross section, as best seen from figure 14. The downwardly extending legs 13.5 and 13.6 on the supports and the horizontal portions 13.7 and 13.8 allow the supports to cooperate with the tops and sides of the heat shields 8 and the rear step 1.31 as illustrated in figure 32, to support the assembly 1325 and also to prevent the assembly 1325 from moving in a forward and or rearward direction when assembled in the barbecue 100.

The gap 13.9 between the horizontal portion 13.7 and the base of the channels 13.1, 13.2 ensures that the channels 13.1 and 13.2, when installed on the heat shield 8 and the step 1.31, will slope downwardly from the back to the front of the-barbecue 100. This downward slope ensures that liquids such as hot grease, oil or fat will, once its arrives in one of the channels 13.1 and 13.2 will continue to the grease collectors 11 for removal.

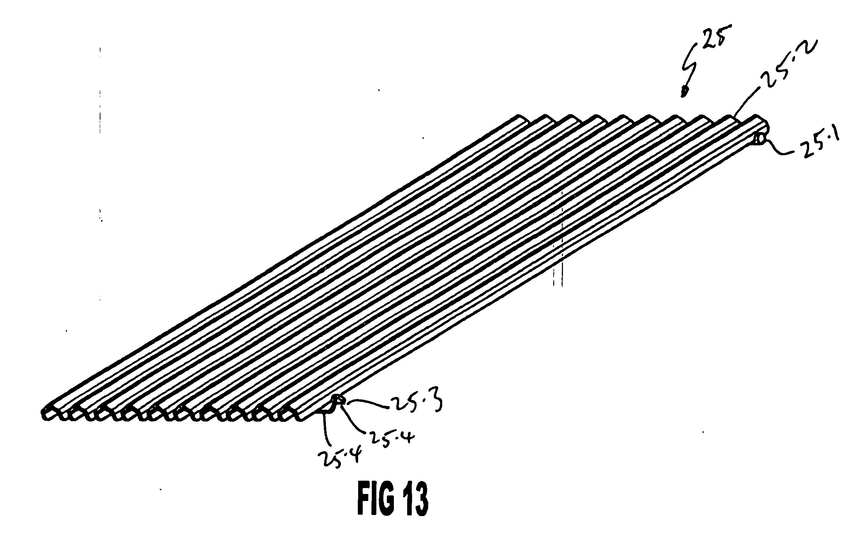

The lower grid 13, has at its higher end a series of cut-outs 13.10 across the sides of each channel 13.1. The cut-outs 13.10 are shaped so as to allow the lower half of a cylindrical rod to sit therein. Such a cylindrical rod 25.1 is used to support and separate the convex upwardly directed channels 25.2 of the upper grid 25, as illustrated in figure 13. The interaction between the rod 25.1 and the cut-outs 13.10 ensures that the upper grid 25 does not deleteriously move in a forward or rearward direction when assembled into the barbecue 100 and when in use.

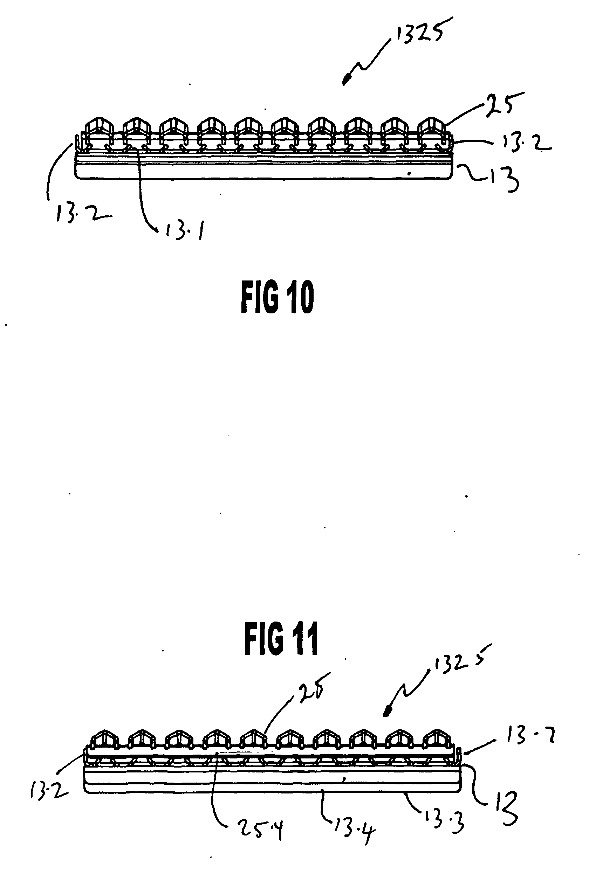

As illustrated in figure 13, the convex upwardly directed channels 25.2 have a longitudinally extending apex, which helps to sear lines in meat being cooked thereon. Further, it will be seen from figures 10 and 11 that the channels 25.2 have downwardly directed sides, of which the outer edges of these sides lie over the channel members 13.1 and 13.2 of the lower grid 13.

As is illustrated in figure 13, it can be seen that the forward ends of the channels 25.2 are kept separate and are supported by an upside down V-shaped support 25.3. When assembled to the lower grid 13, the edges 25.4 of the V-Shaped support 25.3 will sit on top of the side edges of the channels 13.1.

The half channels 13.2 will serve to constrain the lateral movement of the V-shaped support 25.3 and the rod 25.1 when the upper grid 25 is assembled on the lower grid 13.

The depth of the cut-outs 13.10, the thickness of the cylindrical rod 25.1, the depth of the upside down V-shaped support 25.3, and the height of the upper edges of the channels 13.1 in the vicinity of where the V-shaped support 25.3 will make contact, together with the angle of inclination which is produced by the legs and spacings on the lower side of the lower grid 13, and the height difference between the top edge 8.6 of the heat shield 8 and the step 1.31 on the rear wall 1.3 which are used to support the grille assemblies 1325 and the hotplate 12, are selected so as to ensure that the apexes of the channels 25.2, and the planar cooking surface of the hotplate 12 lay at a small angle (of the order of 1 to 2 degrees) to the horizontal plane, so that food or cooking equipment being heated over the grille 1325 will be generally horizontally supported (within 1 or 2 degrees), and in the case of the hotplate 12 any fat, juices, grease which may emanate from articles cooking thereon will move into the respective grease collector 11.

By achieving the desired angles of inclination of the lower grid 13, by means of the supports and features of the lower grid 13 and upper grid 25, and the cooperation of the heights of the step 1.31 on wall 1.3 with the top edge 8.6 of the heat shield 8, the cooking surface of the hotplate 12 and the upper apexes of the channels 25.2 can have a consistent or common angle of inclination with respect to the upper frame 10, and yet is still able to provide a grease management system which ensures that the grease, oil and liquids which are produced from cooking will proceed to the grease collectors 11.

From the front and rear views of the grille assembly 1325 in figures 9, 10 and 11, it can be seen that the upper grid 25 is formed from convex upwardly (concave downwardly) directed channels 25.2. The spacing between the lower edges of the channels 25.2 and the upper edges of the channels 13.1 increases in the direction from the rear to the front of the grille assembly 1325. This can be seen by the difference in spacing illustrated in figure10 which is the rear view to the spacing illustrated in figure 11 which is the front view.

It can also be seen from the front and rear views of figures 10 and 11, that the outer edges of channels 25.2 overlap with the in side edges of the channels 13.1 and 13.2. This helps to ensure that any fat, particles or liquid which moves down over the channels 25.2 will fall into the channels 13.1 and 13.2.

The grille assembly 1325 is constructed from upper and lower grids 13 and 25, and the barbecue 100 uses two grille assemblies 1325. This arrangement helps to make cleaning of the grille assemblies 1325 relatively easy in that each can be put into a dishwasher if needed.

The forward edges of the channels 13.1 of the grille assemblies 1325 protrude past the heat shield 8 and over the trough 11.1 ensuring any oil, liquid or fat dripping from respective troughs or channels 13.1 will fall straight into the trough 11.1.

The upper and lower grids 13 and 25 can be made fabricated from sheet metal or alternatively cast, depending upon user requirements and product specifications.

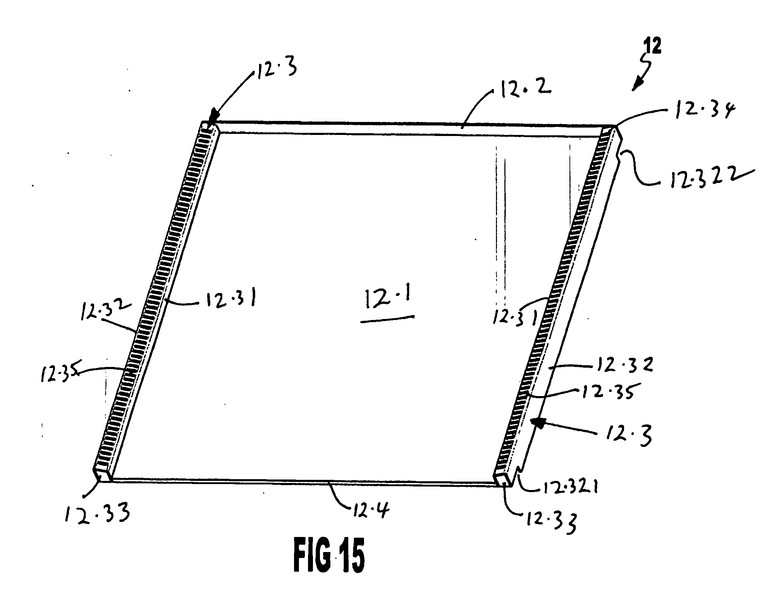

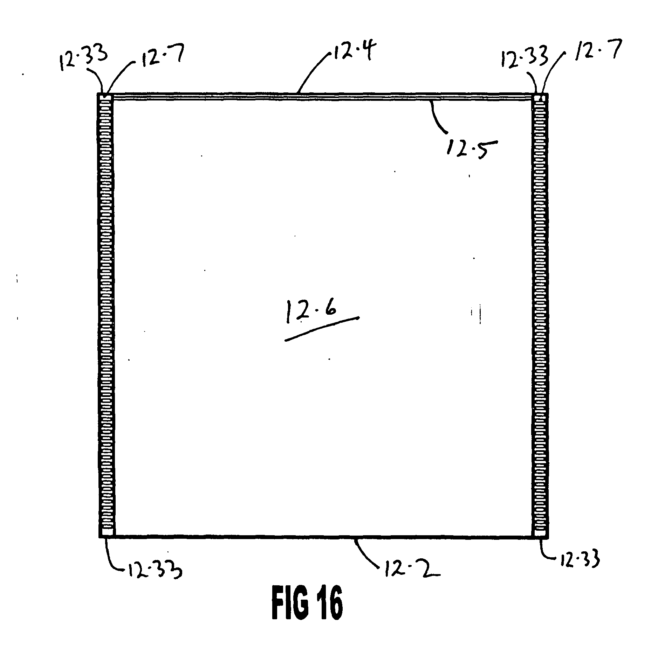

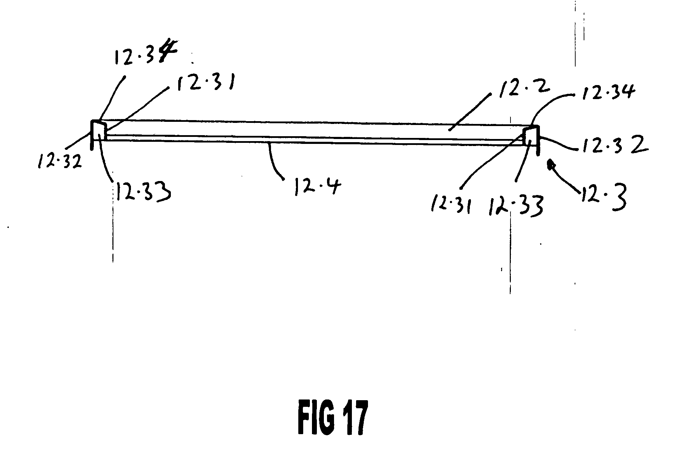

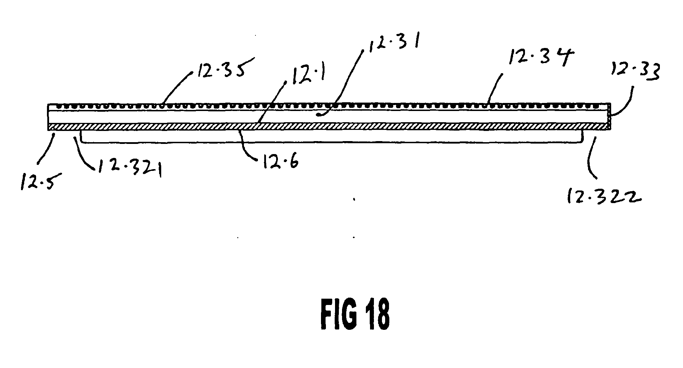

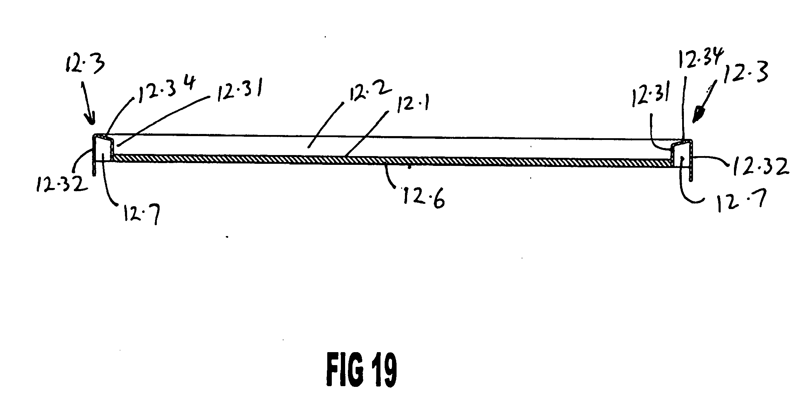

Illustrated in figures 15, 16, 17, 18 and 19 is the hotplate 12. From these figures it can be seen that the hot plate 12 has a generally planar cooking surface 12.1 a rear wall 12.2 with the sides formed from walls 12.3 which only extend along the left and right sides of the hotplate 12. The walls 12.3 are of a generally open box construction which as can be seen from the underneath view of figures 16 and the cross section of figure 19 are boxes which open in a downward direction towards the burners 2, when assembled in the barbecue 100.

The walls 12.3 have side walls 12.31 which are located along the side edges of the cooking surface 12.1 and outside walls 12.32, with the ends being formed by walls 12.33. The top surface 12.34 has an incline relative to the vertical walls 12.31 and 12.32, and in the embodiment illustrated in figures 15, 16, 17, 18 and 19, the walls 12.34 have therethrough a series of vents 12.35 to enable heat which gathers inside the open box construction of wall 12.3 to escape to atmosphere.

The construction and features of the walls 12.3 helps to prevent the hot plate 12 from overheating the cooking surface 12.1 as well as to ensure that any excess heat underneath 12.1 has a lesser impact on food cooking on the adjacent grille assembly 1325, adjacent to the right hand wall 12.3.

The front edge 12.4 of the cooking surface 12.1 extends over the trough 11.1 as illustrated in figures 1 and 3. The width of the walls 12.33 ensures that the length of the front edge is less than the width of the trough 11.1, which in turn ensures that all liquid which falls from the front edge 12.4 will fall into the trough 11.1.

To assist liquid and fat falling from the edge 12.4 there is provided in the side 12.6, which is above the combustion chamber 2.2, a groove 12.5 which extends the width of the hotplate 12, which is best illustrated in figures 16 and 19. By this means, any oil or grease which passes down the surface 12.1 over the edge 12.4 will break contact with the underside 12.6 (or side adjacent combustion chamber 2.2) and will ensure that the grease or oil will drip from the groove 12.5 into the trough 11.1 of the grease collectors 11. If desired, a protruding bead could be used to replace the groove 12.5 to achieve a similar effect.

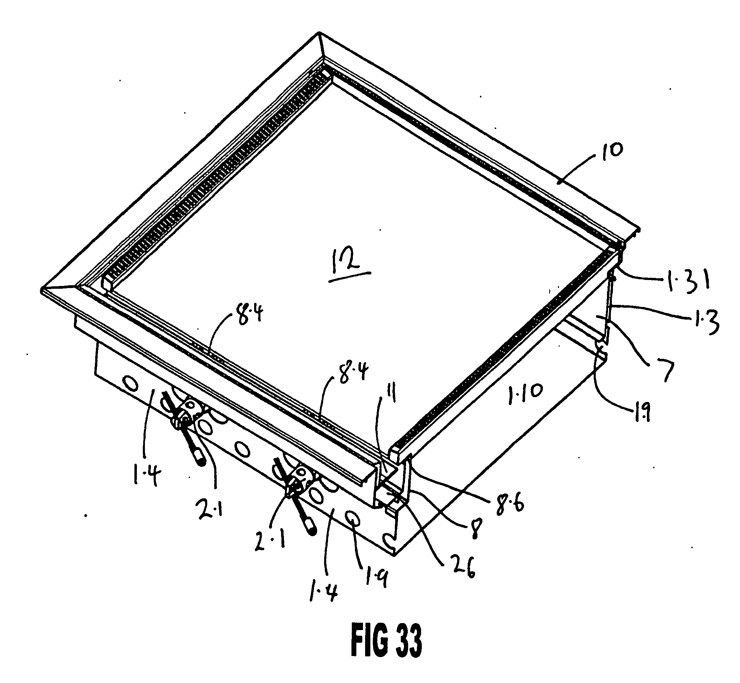

The side walls 12.32 include in the lower edge thereof, a forward cut-out 12.321 and a rearward cut-out 12.322, which serve to set the angle to the horizontal that the cooking surface 12.1 will sit at when assembled in the cabinet 1 on the step 1.31 and the top of the heat shield 8 as illustrated in figure 33. As mentioned above this will place the cooking surface 12.1 at an angle of 1 degree to 2 degrees to the horizontal.

The height of the side walls 12.3 above the level of the cooking surface 12.1 is of the order of 15mm to 20mm and serves to distance and protect the cooking surface 12.1 from any cross winds which come over the sides 12.3 and 12.2.

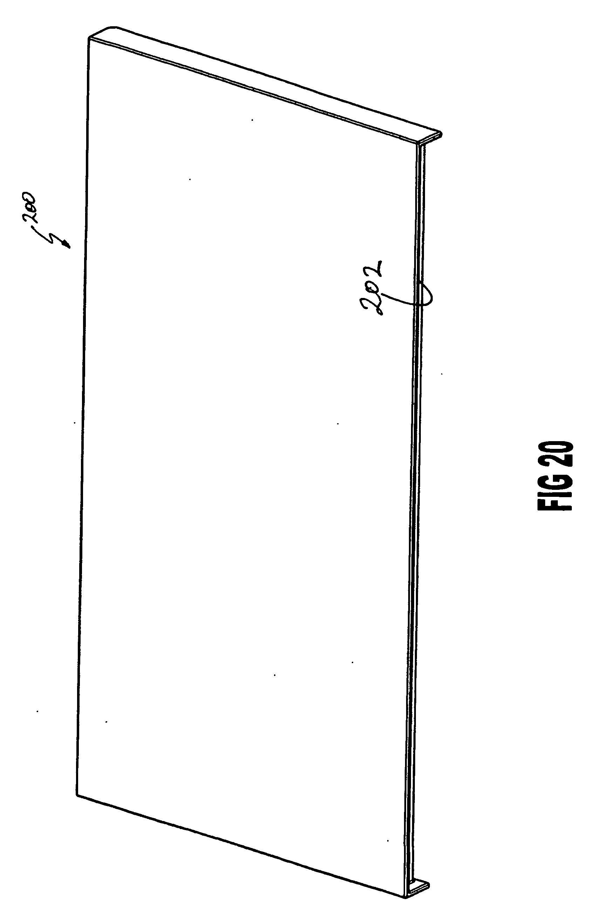

Illustrated in figures 20 to 25 is a lid 200 which can be used with the barbecue 100 described above.

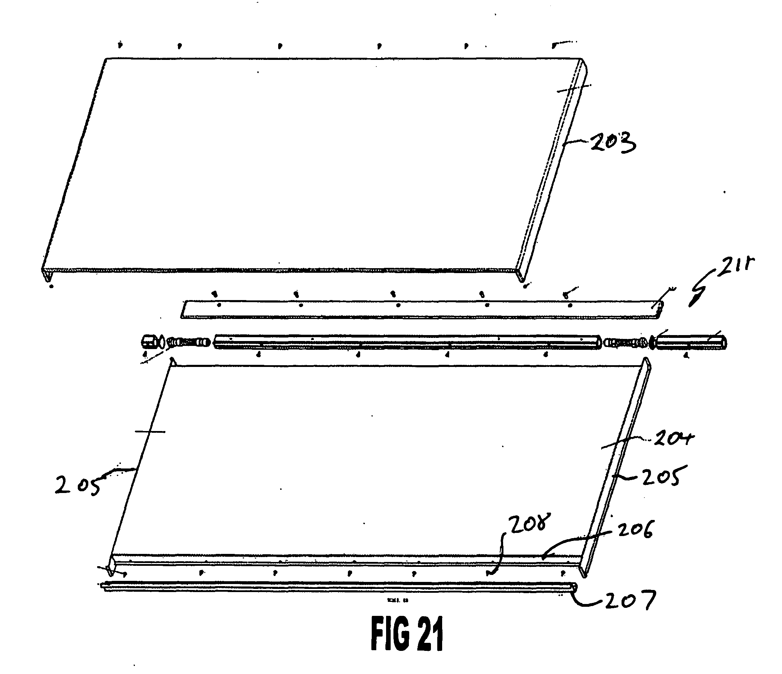

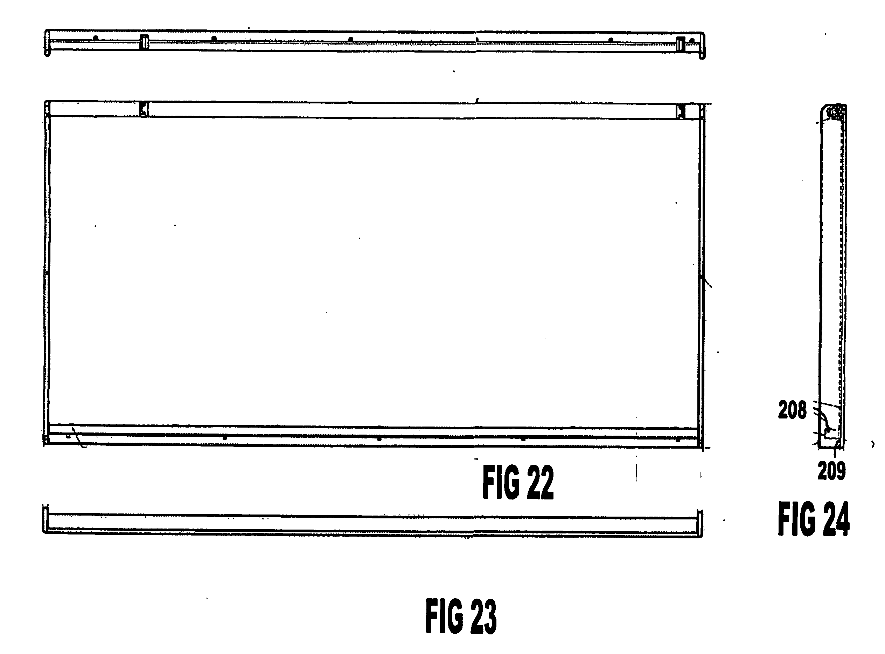

Illustrated in figure 20 the lid is 200 is of a generally planar construction with the forward edge having a built in recessed handle 202. As can be seen from figure 21 the lid 200 has an upper plate 203 which is generally U-shaped in cross section and a lower plate 204 of similar cross section, which has side walls 205 and a front wall 206. The front wall 206 has attached to it a forward most wall 207 of a generally z-shaped cross section which is secured to front wall 206 by means of screws 208 which can be seen in the cross section of figure 24. The forward most wall 207 helps to form a double wall with front wall 206 which extends downwardly from the surface 204 towards the bottom of the lid 200. A heat shield is produced by this double wall construction leaving the forward edge 209 to remain at a sufficiently lower temperature allowing the user or operator to use the forward edge to lift the lid to an open position or lower to a closed position.

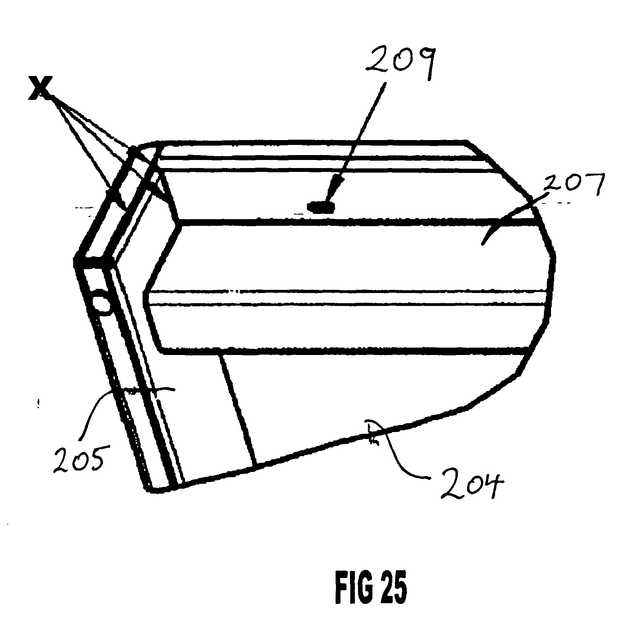

When constructing the lid 200 of figure 25, at the locations marked with an X, it is preferred to weld and dress the welds so as to produce a smooth and presentable surface and join.

At the rear of the lid 200, and constructed within the confines of a rear wall, is a spring loaded hinge system 211. The hinge system 211 can connect to brackets (not illustrated) which extend from the cabinet walls 1.1 and 1.2 and project upwardly above the upper surface of the barbecue 100 between the frame surround 10 and the perspective left edge of the hot plate 12 and the far right edge of the right hand grille assembly 1325.

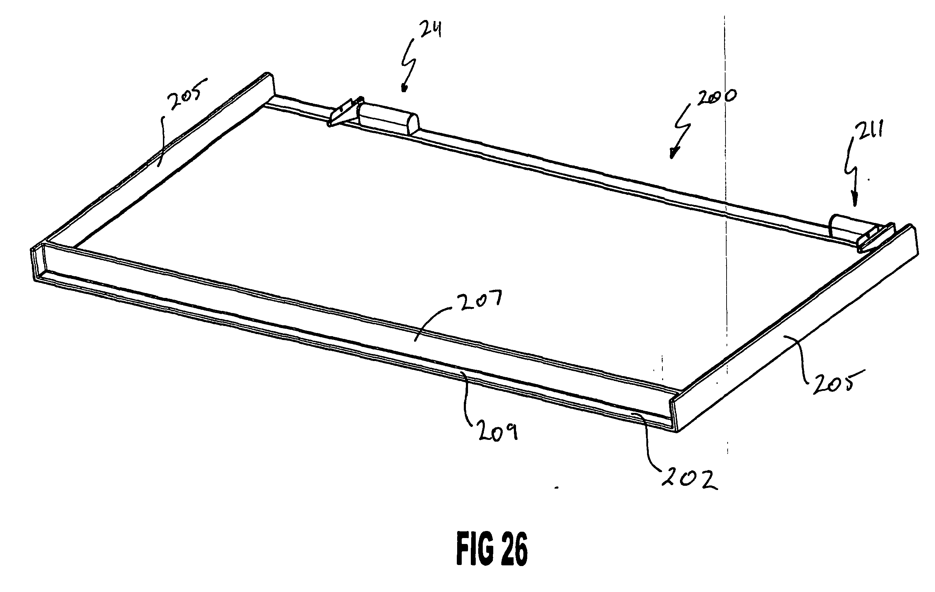

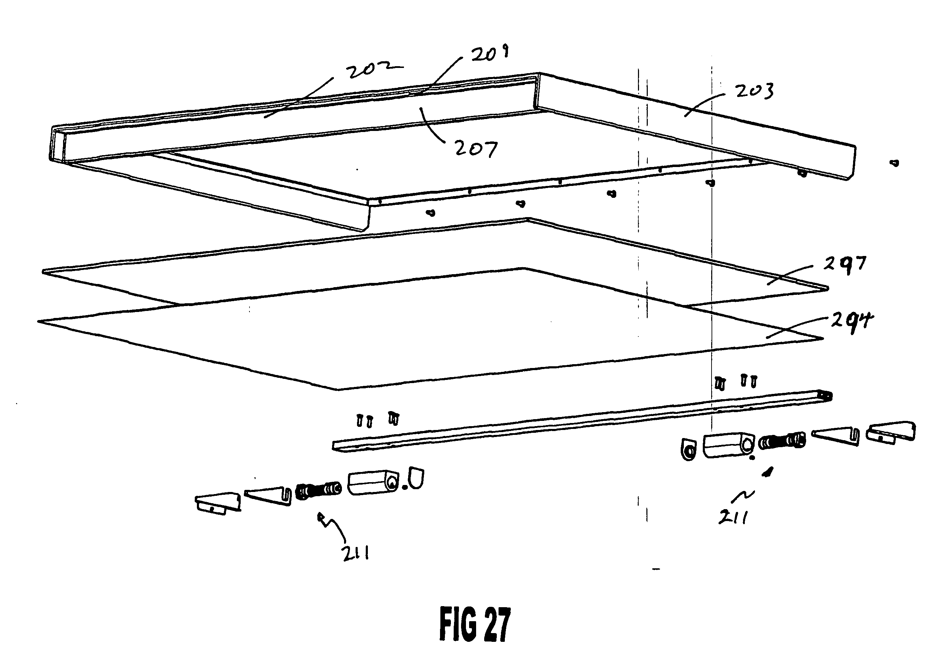

Illustrated in figures 26 and 27 is an alternative lid 200 which is similar to the lid 200 of figures 20 to 25, and like parts have been like numbered. The differences include that the rear edge does not include a rear wall, with the spring or biased hinges 211 being mounted to the underside of the lid top plate 203. This has the effect of leaving the rear edge open.

Another difference is that the lid top plate 203 includes the forward most wall 207 formed integrally. A further difference is that the lid 200 of figures 26 and 27 includes a layer of Masonite or particle board, to decrease the overall weight and improve the insulation of the lid top plate 203.

As the rear edge of lid 200 of figures 26 and 27 is open, a complementary rear wall together with bracket for mounting the lid 200 to a barbecue 100, can be provided for attachment to the barbecue 100.

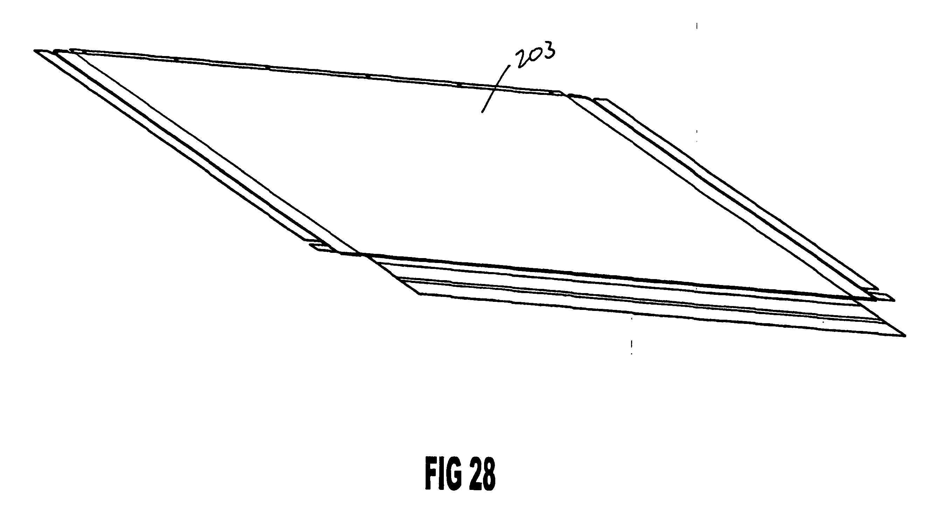

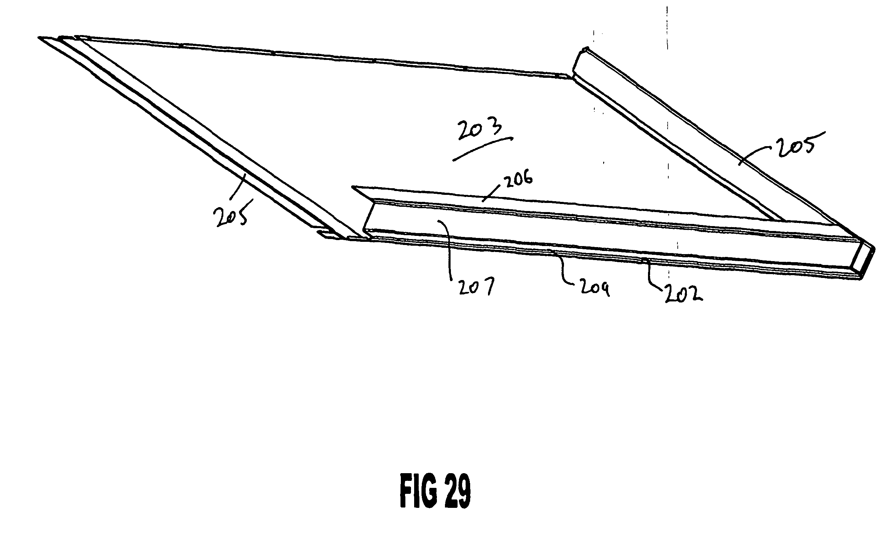

Illustrated in figure 28 is a blank from which the lid top plate 203 can be made and in figure 29 is shown with some sides bent into shape. The lid top plate 203 has as is shown in figure 29 integral sides 205 (of which only one is bent into position) and integral forward wall 206 (prior to being bent into position) and forward most wall 207 (bent into position). This arrangement is believed to reduce manufacturing cost and provide a lighter construction than the system described in figures 20 to 25.

Illustrated in figure 30 is a diagrammatic representation of the U-shaped cut outs required in benches as described above with respect to prior art systems, whereas in figure 31 is a diagrammatic representation of the aperture/hole in the bench top required for use with the barbecue 100 described above.

In the above description the grease collector 11 has its rearward edge 11.3 located below the viewing panels 8.3 and 8.4 so as not to obstruct an operator's vision therethrough. However, if desired, keeping in mind the geometric requirements to remove the grease collector 11 from the cabinet 1, the rearward edge 11.3 could be higher than the viewing panels 8.3 and 8.4, in which case a viewing panel will need to be provided in the rearward wall of the collector so that an operator can see through the rearward wall and then through apertures 8.3 and 8.4. This will have the advantage of being able to provide a grease collector 11 with a greater capacity than that of figure 6.

If desired the two grease collectors 11 can be replaced by a single unit which extends across the whole front edge of the barbecue 100. The difficulty with such a long collector 11 is the problems of disposal and removal as tiny movements which put the trough 11.1 out of level during the removal process may mean liquid splashes and sloshes around making a mess during the removal process. Further if the collector 11 extends across the whole width of the barbecue 100, it would be unlikely that it could then fit into a dishwasher for final cleaning, whereas the arrangement described above is able to be cleaned in a dishwasher.

The arrangement of the grease collectors 11, and their securing mechanism inside the cabinet helps to provide a self locating system. The forward surface of the wall 11.4 or the inside surface of the cabinet wall 1.4 can be provided with means to maintain these walls 11.4 and 1.4 at a distance from each other so the weight of the contents of the collectors 11 can be borne while at the same time allowing air to pass around the collectors 11 and thus help keep them cool.

The above described arrangement of the hotplate 12 and grille assemblies 1325 being on the right and left hand side of the barbecue 100 respectively is preferred, and if desired the respective positions can be swapped, or the hotplate 12 placed between two grille assemblies 1325. However to prevent this the manufacturer can provide means to ensure that only the hotplate 12 can be used on the left had side away from the controls by providing formations or fittings to prevent the hotplate 12 and the grille assemblies 1325 from having their respective positions interchanged.

The grille assemblies 1325 are illustrated with the upper grid 25 being made from convex upwardly oriented channels 25.2. As the grille assembly is preferably made from stainless steel, the use of convex upwardly oriented channels keeps the amount of stainless steel used to a practical minimum. However, depending upon the material or manufacturing process used to make the upper grid 25, the channels 25.2 can be replaced by bar members which are prismatic in construction. It is also preferable that the upwardly directed surface of the bar members includes a longitudinally extending apex, and preferably vertical sides so that fat or liquids can fall from the sides.

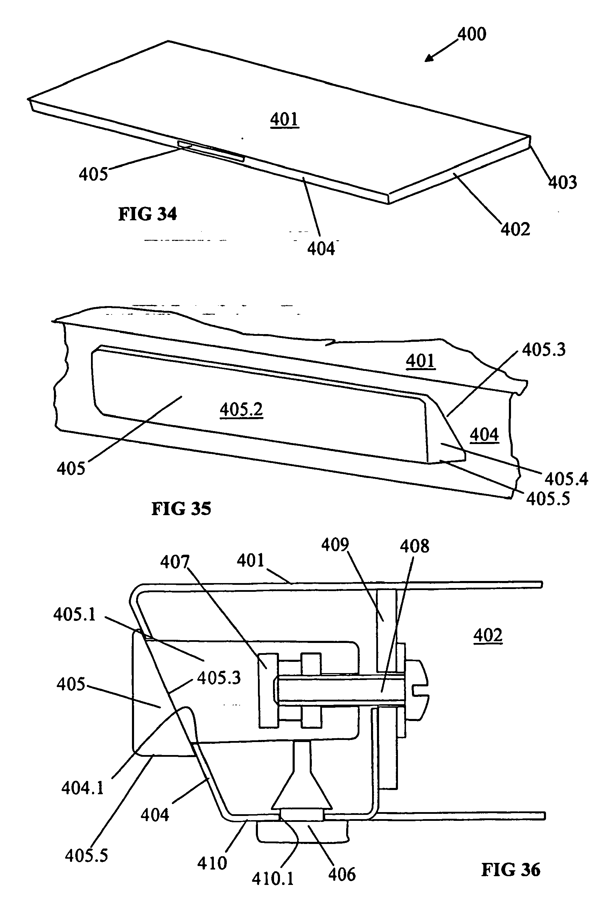

Illustrated in figures 34, 35 and 36 is an alternative lid 400 for use with the barbecue described above. It can have a similar construction to the lids previously described. The lid 400 has an upper planar surface 401, with perpendicular left and right sides 402, and rear side 403. The front side 404 is angled to the vertical approx 15 to 30 degrees, so as to form an undercut or overhang. The lid 404 is in the main constructed from steel or stainless steel, however the handle 405 is manufactured from a heat insulating material such as silicone rubber or any appropriate material, so that a user can have a relatively cool surface with which to raise or lower the lid by rotating the lid around its hinges, should the lid get hot due to sunlight or cooking.

The handle 405, as illustrated in figure 35, has a generally vertical front face 405.2, a sloping rear face 405.3 and generally triangular sides 405.4. The angle that rear face 405.3 makes to front face 405.2 is the approximately same angle to the vertical that front side 404 makes to the vertical. The front face 405.2 provides sufficient surface area for the embossing or printing of a trade mark of the manufacturer of the barbecue or lid. An underneath side 405.5 of the handle 405 provides a surface for a user to engage to rotate the lid 400 around its hinges.

As can be seen from figure 36, the handle 405 preferably has two rearwardly extending cylindrical projections 405.1 having thread inserts 407 which are captured in the handle 405 during moulding. The thread inserts 407 receive screws 408 which pass through a member or wall 409 (similar to wall 206 of earlier figures) so as to secure the handle 405 in place via a washer 408.1, through two holes 404.1 in front side 404. The cylindrical projections have a smaller diameter than the length of rear face 405.3 of handle 405 which thus provides a shoulder to engage the front face of front side 404.

In figure 36 it can also be seen that the lid 400 has an underside member 410 which extends rearwardly from the bottom edge of the front side 404. The underside member 410 extends to the wall 409, and provides an under surface to which feet 406 can be inserted into apertures 410.1 in underside 410. The underside 410 preferably starts at a location which is forward of the front edge of the frame surround 10, so as to help protect the front edge of the frame surround 10 from the elements.

The lid 400 can be manufactured so as to cover only the cooking surface of the barbecue, or if desired wide enough to cover not only the cooking surface but the controls 17 as well, so as to keep the whole of the barbecue's components protected from weather.

Whilst the above barbecue 100 and the majority of its sheet metal components are manufactured preferably from stainless steel, any suitable materials such as mild steel or the like can be selected with the expectation that appropriate protection such as painting or galvanising or enamelling could be used for the protection of the metal from the elements as the barbecue 100 will more than likely be used in an outside environment.

In the above description and claims the word GREASE is used as in grease management system or grease collection system. The word grease in its normal context describes highly viscous liquids. However in the present description and claims, due to heating, grease becomes liquid or less viscous. Further in this context "grease" includes meat juices, blood melted fat, solid particles of meat or gristle which come off meat being cooked, charcoaled pieces of cooked food. While such solids will not generally, under the influence of gravity, move down the slopes provided in the grille assemblies 1325 or on the hotplate 12, they can be pushed along respective surfaces to enter into the grease collectors 11. Thus the grease management systems or grease collectors are also waste solid and liquid management systems or waste solid and liquid collectors, respectively.

Where ever it is used, the word "comprising" is to be understood in its "open" sense, that is, in the sense of "including", and thus not limited to its "closed" sense, that is the sense of "consisting only of". A corresponding meaning is to be attributed to the corresponding words "comprise", "comprised" and "comprises" where they appear.

## Claims

1. A barbecue (100) having an outer cabinet (1) which is adapted to fit into a bench top via hole in said bench, said cabinet having an upper periphery adapted to engage an upper surface of said bench, said barbecue including along at least a portion of one side a trough (26) which extends downwardly from said upper periphery, said barbecue (100) having a wall (8) separating said trough (26) from a combustion chamber (2.2) wherein there is located at least one burner (2), **characterized in that** said wall (8) includes a viewing panel (8.3, 8.4) so that an operator standing close to said one side can view flame on said burner (2) through said trough (26) and said panel (8.3, 8.4).

2. A barbecue as claimed in claim 1 wherein said wall (8) includes at least one viewing panel (8.3, 8.4) for each burner (2) present in said barbecue (100).

3. A barbecue as claimed in any one of the preceding claims wherein said wall (8) is formed from an inner wall (8.1) and an outer wall (8.2) with an air gap (8.5) between said inner and outer wall.

4. A barbecue as claimed in any one of the preceding claims wherein said viewing panel (8.3, 8.4) is formed by at least one aperture through said wall (8).

5. A barbecue as claimed in any one of the preceding claims wherein said viewing panel (8.3, 8.4) is covered by a grating or is a means to manually ignite said burner (2).

6. A barbecue as claimed in any one of claims 1 to 4, wherein said viewing panel (8.3, 8.4) is covered by a heat proof see-through panel such as a mica panel or the like.

7. A barbecue as claimed in any one of the preceding claims wherein said trough (26) is adapted to receive a grease collector (11)

8. A barbecue as claimed in claim 7, wherein said grease collector (11) includes an aperture through said viewing panel (8.3, 8.4) can be viewed.

9. A barbecue as claimed in claim 7, wherein said grease collector (11) has a rearward portion which sits below said viewing panel (8.3, 8.4), whereby said grease collector (11) does not obstruct a user's view of the viewing panel when assembled into said barbecue (100).

## Patentansprüche

1. Grill (100) mit einem äußeren Gehäuse (1), das ausgelegt ist, um in die Oberseite einer Arbeitsplatte durch ein Loch in der Arbeitsplatte zu passen, wobei das Gehäuse (1) einen oberen Umfang aufweist, der ausgelegt ist, um in eine obere Fläche der Arbeitsplatte einzugreifen, der Grill wenigstens entlang eines Abschnitts einer Seite eine Mulde (26) aufweist, welche sich vom oberen Umfang nach unten erstreckt, und der Grill (100) eine Wand (8) aufweist, welche die Mulde (26) von einer Brennkammer (2.2) trennt, worin wenigstens ein Brenner (2) angeordnet ist; **dadurch gekennzeichnet, dass** die Wand (8) ein Sichtfenster (8.3, 8.4) umfasst, damit ein Benutzer, der nahe an dieser Seite steht, eine Flamme auf dem Brenner (2) durch die Mulde (26) und das Fenster (8.3, 8.4) sehen kann.

2. Grill nach Anspruch 1, wobei die Wand (8) wenigstens ein Sichtfenster (8.3. 8.4) für jeden Brenner (2) umfasst, der im Grill (100) vorhanden ist.

3. Grill nach einem der vorhergehenden Ansprüche, wobei die Wand (8) aus einer inneren Wand (8.1) und einer äußeren Wand (8.2) mit einem Luftspalt (8.5) zwischen der inneren und der äußeren Wand gebildet ist.

4. Grill nach einem der vorhergehenden Ansprüche, wobei das Sichtfenster (8.3, 8.4) durch wenigstens eine Öffnung durch die Wand (8) ausgebildet ist.

5. Grill nach einem der vorhergehenden Ansprüche, wobei das Sichtfenster (8.3, 8.4) durch ein Gitter abgedeckt ist oder ein Mittel zum manuellen Zünden, des Brenners (2) ist.

6. Grill nach einem der Ansprüche 1 bis 4, wobei das Sichtfenster (8.3, 8.4) durch eine hitzebeständige durchsichtige Scheibe, wie beispielsweise eine Glimmerscheibe oder dergleichen abgedeckt ist.

7. Grill nach einem der vorhergehenden Ansprüche, wobei die Mulde (26) ausgelegt ist, um eine Fettauffangvorrichtung (11) aufzunehmen.

8. Grill nach Anspruch 7, wobei die Fettauffangvorrichtung (11) eine Öffnung umfasst, durch die das Sichtfenster (8.3, 8.4) gesehen werden kann.

9. Grill nach Anspruch 7, wobei die Fettauffangvorrichtung (11) einen hinteren Abschnitt umfasst, der unter dem Sichtfenster (8.3, 8.4) sitzt, wodurch die Fettauffangvorrichtung (11) den Blick eines Benutzers auf das Sichtfenster nicht behindert, wenn in den Grill (100) eingebaut.

## Revendications

1. Barbecue (100) ayant une carcasse externe (1) qui est adaptée pour être insérée dans un plan de travail par l'intermédiaire d'un trou dans ledit plan de travail, ladite carcasse ayant une périphérie supérieure adaptée pour mettre en prise une surface supérieure dudit plan de travail, ledit barbecue comprenant le long d'au moins une partie d'un côté, une goulotte (26) qui s'étend vers le bas à partir de ladite périphérie supérieure, ledit barbecue (100) ayant une paroi (8) séparant ladite goulotte (26) d'une chambre de combustion (2.2) dans laquelle on trouve au moins un brûleur (2), **caractérisé en ce que** ladite paroi (8) comprend un panneau d'observation (8.3, 8.4) de sorte qu'un opérateur qui se trouve à proximité dudit côté peut observer la flamme sur ledit brûleur (2) à travers ladite goulotte (26) et ledit panneau (8.3, 8.4).

2. Barbecue selon la revendication 1, dans lequel ladite paroi (8) comprend au moins un panneau d'observation (8.3, 8.4) pour chaque brûleur (2) présent dans ledit barbecue (100).

3. Barbecue selon l'une quelconque des revendications précédentes, dans lequel ladite paroi (8) est formée à partir d'une paroi interne (8.1) et d'une paroi externe (8.2) avec un espace d'air (8.5) entre lesdites parois interne et externe.

4. Barbecue selon l'une quelconque des revendications précédentes, dans lequel ledit panneau d'observation (8.3, 8.4) est formé par au moins une ouverture à travers ladite paroi (8).

5. Barbecue selon l'une quelconque des revendications précédentes, dans lequel ledit panneau d'observation (8.3, 8.4) est recouvert par une grille ou est un moyen pour allumer manuellement ledit brûleur (2).

6. Barbecue selon l'une quelconque des revendications 1 à 4, dans lequel ledit panneau d'observation (8.3, 8.4) est recouvert par un panneau d'observation ignifuge tel qu'un panneau en mica ou similaire.

7. Barbecue selon l'une quelconque des revendications précédentes, dans lequel ladite goulotte (26) est adaptée pour recevoir un collecteur de graisse (11).

8. Barbecue selon la revendication 7, dans lequel ledit collecteur de graisse (11) comprend une ouverture à travers laquelle ledit panneau d'observation (8.3, 8.4) est visible.

9. Barbecue selon la revendication 7, dans lequel ledit collecteur de graisse (11) a une partie arrière qui est installée au-dessous dudit panneau d'observation (8.3, 8.4), moyennant quoi ledit collecteur de graisse (11) n'obstrue pas la vue d'un utilisateur du panneau d'observation lorsqu'il est assemblé dans ledit barbecue (100).
